# EUROPÄISCHE PATENTSCHRIFT

(11) **EP 1 161 652 B1**
(45) Veröffentlichungstag und Bekanntmachung des Hinweises auf die Patenterteilung: **01.02.2006**
(21) Anmeldenummer: 00910762.4
(22) Anmeldetag: 03.03.2000
(51) Int. Cl.: G01B 7/00, H01L 41/09

(54) **ELEKTROMECHANISCHE ANTRIEBSVORRICHTUNG MIT PIEZOELEMENT**
ELECTROMECHANICAL DRIVE ELEMENT COMPRISING A PIEZOELECTRIC ELEMENT
DISPOSITIF D'ENTRAINEMENT ELECTROMECANIQUE DOTE D'UN ELEMENT PIEZO-ELECTRIQUE

(30) Priorität: 06.03.1999 DE 19909913
(43) Veröffentlichungstag der Anmeldung: 12.12.2001
(73) Patentinhaber: Kleindiek, Stephan Dr., 72770 Reutlingen (DE)
(72) Erfinder: KLEINDIEK, Stephan, D-72074 Tübingen (DE)
(74) Vertreter: Möbus, Daniela
(86) Internationale Anmeldenummer: PCT/EP2000/001843
(87) Internationale Veröffentlichungsnummer: WO 2000/054004

(56) Entgegenhaltungen:
- EP-A- 0 112 454
- EP-A- 0 460 387
- WO-A-96/17430
- WO-A-98/18169
- DE-A- 4 015 196
- GB-A- 2 314 452
- US-A- 5 319 257
- PATENT ABSTRACTS OF JAPAN vol. 017, no. 658 (P-1654), 6. Dezember 1993 (1993-12-06) & JP 05 216537 A (JAPAN AVIATION ELECTRON IND LTD), 27. August 1993 (1993-08-27)
- PATENT ABSTRACTS OF JAPAN vol. 1995, no. 05, 30. Juni 1995 (1995-06-30) & JP 07 039175 A (SEIKO INSTR INC), 7. Februar 1995 (1995-02-07)
- PATENT ABSTRACTS OF JAPAN Bd. 018, Nr. 667 (E-1645) 15 Dezember 1994 & JP 06 261 559 A (MINOLTA CAMERA CO LTD) 16 September 1994

## Beschreibung

Die Erfindung betrifft eine elektromechanische Antriebsvorrichtung, insbesondere zur exakten Positionierung eines Gegenstands im Nanometer- bis Zentimeterbereich, mit den Merkmalen des Oberbegriffs des Anspruchs 1.

Eine derartige elektromechanische Antriebsvorrichtung ist beispielsweise durch die EP-A-0 112 454 bekannt geworden.

Die aus der EP-A-0112454 bekannte elektromechanische Antriebsvorrichtung weist einen in Kugellagern drehbar gelagerten Rotor und einen piezoelektrischen Drehantrieb mt ersten und zweiten Piezoelementen auf. Die ersten Piezoelemente umgeben den Rotor ringförmig und dehnen sich bei Anlegen einer Spannung radial aus, sodass sie sich drehfest an den Rotor klemmen. Die zweiten Piezoelemente sind an den ersten Piezoelementen befestigt und dehnen sich bei Anlegen einer Spannung tangential aus. Diese tangentiale Bewegung wird bei geklemmten ersten Piezoelementen auf den Rotor übertragen. Für diesen Drehantrieb sind zwei unterschiedliche Piezoelemente erforderlich, deren Ansteuerung exakt aufeinander abgestimmt sein muss, was eine entsprechend aufwändige Ansteuerung erfordert.

Aus der WO-A-98/18169 ist ebenfalls ein piezoelektrischer Drehantrieb für eine Welle bekannt. Der Drehantrieb weist erste Piezoelemente zum Ausbilden einer drehfesten Klemmverbindung zwischen der Welle und einer Kupplungseinheit auf, die wiederum von einem zweiten Piezoelement in Drehrichtung angetrieben wird. Diese Drehbewegung wird bei geklemmter Kupplungseinheit auf die Welle übertragen. Auch hier sind zwei unterschiedliche Piezoelemente erforderlich. Außerdem ist die Welle axial nicht geführt, sondern nur periodisch klemmend gehalten, sodass die Welle nicht spielfrei gelagert ist.

Weiterhin ist aus der EP-A-0460387 ein elektrischer Traktionsmotor mit einem piezoelektrischen Drehantrieb bekannt, wobei erste piezoelektrische Aktuatoren eine drehfeste Verbindung eines Rotors mit zweiten piezoelektrischen Aktuatoren herstellen, die tangential wirken und so den Rotor in Drehrichtung antreiben.

Schließlich ist aus der US-A-5319257 noch ein piezoelektrischer Linearantrieb für eine Welle bekannt, wobei erste Piezoelemente eine drehfeste Verbindung der Welle mit zweiten Piezoelementen herstellen, die axial wirken und so die Welle axial vorschieben.

In der JP 626 15 59 ist ein Aktuator beschrieben, der ein piezoelektrisches Element umfasst. Wenn eine Sägezahnspannung an die Elektroden des piezoelektrischen Elements angelegt wird, wird ein bewegliches Element um einen bestimmten Winkel bezüglich eines feststehenden Elements verdreht. Dadurch wird auch ein Rotor um einen definierten Winkel verdreht. Bei plötzlich abfallender Spannung wird das piezoelektrische Element schlagartig verkleinert. Das bewegliche Element wird in seine Ausgangsstellung zurückbewegt. Der Rotor bleibt jedoch in seiner Position.

Aus der EP 0 611 485 B1 ist ein Linear-Motor mit einem Piezoelement bekannt, der dazu geeignet ist, eine Spitze einer nadelähnlichen Sonde bis in einen Bereich atomarer Größenordnung auf einer Oberfläche eines Objektes zu positionieren. Diese bekannte Positioniervorrichtung zeichnet sich dadurch aus, dass sie Sonden mit hoher Präzision im Nanometerbereich und gleichzeitig aber um größere Verstellwege im Zentimeterbereich bewegen kann. Sie vermeidet dabei die Nachteile herkömmlicher Einrichtungen wie Führungsspiel, Umkehrspiel, Drift, Schwingungsanfälligkeit oder Überdimensionierung.

Die bekannte Positioniervorrichtung eignet sich jedoch nur bedingt zu einer Änderung der Winkellage eines Gegenstands. Hierzu müssen die Positioniervorrichtungen mit entsprechenden Kopplungselementen zu dem zu positionierenden Gegenstand, beispielsweise einer Sonde, eingesetzt werden. Außerdem lassen sich nur kleine Winkelverstellungen erzielen.

Der vorliegenden Erfindung liegt die Aufgabe zugrunde, eine elektromechanische Antriebsvorrichtung zu schaffen, die Gegenstände bei geringem konstruktiven Aufwand mit hoher Präzision in der Winkellage verstellen kann.

Die Aufgabe wird mit einer elektromechanischen Antriebsvorrichtung mit den Merkmalen des Anspruchs 1 gelöst.

Die erfindungsgemäße Antriebsvorrichtung kann in sehr kleinen Abmessungen hergestellt werden, sodass Störungen durch Temperatur oder äußere mechanische Einwirkungen beispielsweise durch Trittschall nur äußerst gering sind.

Das mindestens eine Piezoelement verändert seine Ausdehnung unter dem Einfluss der elektrischen Spannung nur um circa einen Mikrometer, sodass die Bewegungen der mindestens einen Rotoraufnahme äußerst gering sind. Damit auch größere Verstellwege des Rotors möglich sind, kann der Rotor reibend rotierbar in der mindestens einen Rotoraufnahme gelagert sein. Die Reibung zwischen dem Rotor und der mindestens einen Rotoraufnahme kann dabei vorzugsweise derart sein, dass der Rotor verhältnismäßig schnellen Drehbewegungen der mindestens einen Rotoraufnahme nicht folgt, aber verhältnismäßig langsamen Drehbewegungen der mindestens einen Rotoraufnahme folgt. Wird die Rotoraufnahme also durch das Piezoelement langsam bewegt, folgt der Rotor der Bewegung. Wird die Rotoraufnahme hingegen durch das Piezoelement relativ schnell bewegt, so kann der Rotor durch seine Trägheit der Bewegung nicht mehr folgen. Durch aufeinanderfolgende, abwechselnd langsame und schnelle Bewegungen der Rotoraufnahmen, kann eine quasi kontinuierliche Rotationsbewegung des Rotors in der Rotoraufnahme erreicht werden. Die Elektroden des mindestens einen Piezoelements können hierzu an einen Sägezahngenerator angeschlossen sein, der im Wechsel langsame und schnelle Ausdehnungen und Kontraktionen des mindestens einen Piezoelements und damit Drehbewegungen der mindestens einen Rotoraufnahme erzeugt, wobei der Rotor den langsamen Drehbewegungen folgt und den schnellen Drehbewegungen nicht folgt.

Vorzugsweise kann die mindestens eine Rotoraufnahme ein Lagerring sein, der über mehrere Stege an dem Lagerblock gelagert ist. Die Stege bilden dabei Biegegelenke, wodurch die Vorrichtung eine hohe mechanische Stabilität erreicht. Bei herkömmlichen Anordnungen können von außen auf das Piezoelement übertragene Kräfte, insbesondere Kräfte transversal zu seiner Ausdehnungsrichtung, den brüchigen Piezokristall zerstören. Die durch die Stege gebildeten Biegegelenke können hier solche Querkräfte jedoch aufnehmen, sodass es nicht zu einer Zerstörung des Piezokristalls kommen kann.

Ein weiterer Vorteil dieser Anordnung besteht darin, dass die Biegegelenke die zu bewegenden Teile nicht führen müssen und dadurch Rückstellkräfte erzeugen. Die Rückstellkräfte der Stege greifen nur am Piezoelement an und sind außerdem sehr klein, da sich das Piezoelement nur um circa einen Mikrometer ausdehnt oder zusammenzieht. Da die Stege nicht am Rotor angreifen, sind auch beliebig große Verstellwinkel des Rotors erreichbar.

Bei einer weiteren vorteilhaften Ausgestaltung kann die Lagervorrichtung zwei über mehrere Stege an Lagerblöcken gelagerte Lagerringe als Rotoraufnahmen aufweisen, in denen die Enden des Rotors gelagert sind, wobei mindestens einer der Lagerringe mittels mindestens eines Piezoelements verdrehbar ist. Es ist damit also möglich, den Rotor beidseitig anzutreiben oder aber nur einseitig, wobei dann der zweite Lagerring als reines Widerlager dient. Die beiden Lagerringe bilden in jedem Fall zwei Gleitlager, die an den Rotor angedrückt werden, wodurch eine spielfreie Drehung des Rotors möglich wird. Dadurch lassen sich auch im Nanometer-Bereich präzise Verstellungen erreichen.

Bei einer anderen Ausgestaltung kann die Lagervorrichtung einen piezoelektrisch angetriebenen Lagerring zur Aufnahme eines Endes des Rotors und ein Widerlager geringerer Reibung für das andere Ende des Rotors aufweisen. Mit einer solchen Ausgestaltung lassen sich besonders präzise Bewegungen erzielen.

Zur Reduzierung der Reibung kann der Rotor auch sich verjüngende Enden aufweisen. Diese können beispielsweise als Kugelkalotten ausgebildet sein. Falls der Rotor nur einseitig ängetrieben wird, ist es dabei vorteilhaft, wenn die Kugelkalotte am Widerlager einen geringeren Durchmesser aufweist.

Nachfolgend wird ein bevorzugtes Ausführungsbeispiel einer erfindungsgemäßen Antriebsvorrichtung anhand der Zeichnung näher beschrieben.

Es zeigen:
- Fig. 1: eine Seitenansicht auf eine erfindungsgemäße Antriebsvorrichtung;
- Fig. 2: eine Innenansicht einer Lagervorrichtung der Antriebsvorrichtung aus Fig. 1.

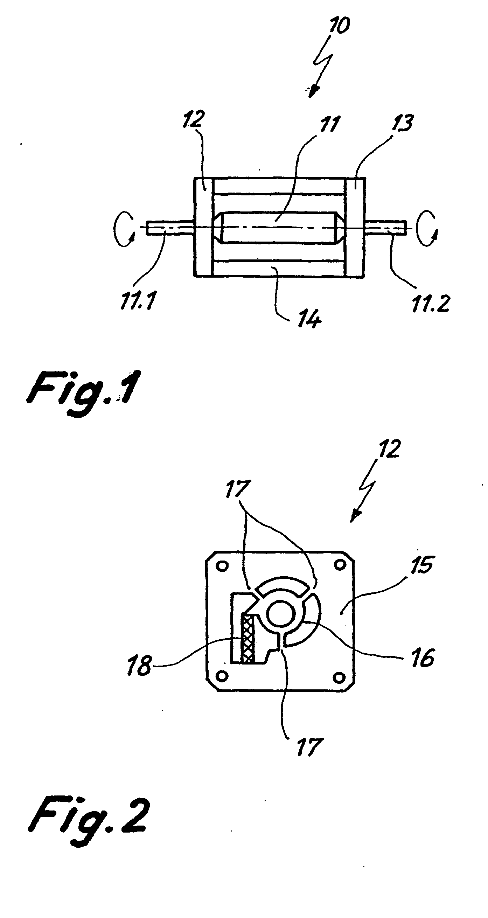

Die Antriebsvorrichtung 10 aus Fig. 1 weist einen Rotor 11 mit sich verjüngenden Enden 11.1 und 11.2 auf, die in zwei Lagerelementen 12 und 13 gelagert sind. Die beiden Lagerelemente 12 und 13 sind durch Streben 14 miteinander verbunden und bilden gemeinsam die Lagervorrichtung für den Rotor 11. Dabei werden die Lagerelemente 12 und 13 federnd an den Rotor angedrückt.

In der Innenansicht des Lagerelements 12 aus Fig. 2 ist ersichtlich, dass dieses aus einem Lagerblock 15 gebildet ist, an dem ein Lagerring 16 als Rotoraufnahme über drei Stege 17 befestigt ist. In den Lagerring 16 ist dann der in Fig. 2 nicht dargestellte Rotor 11 eingesetzt. Durch ein Piezoelement 18, dessen Elektroden in nicht näher dargestellter Weise mit beispielsweise einem Sägezahngenerator verbunden sind, kann der Lagerring 16 durch Ausdehnung und Kontraktion des Piezoelements 18 in eine Drehbewegung versetzt werden, wobei die Stege 17 als Biegegelenke wirken. Der Rotor 11 ist im Lagerring 16 derart reibend gelagert, dass er langsamen Drehbewegungen des Lagerrings 16 folgen kann, schnellen Bewegungen aufgrund seiner Trägheit jedoch nicht mehr. Durch langsame Bewegungen des Lagerrings 16 kann der Rotor daher um sehr kleine Verstellwinkel verstellt werden, während durch einen Wechsel von schnellen und langsamen Bewegungen des Lagerrings 16 große Verstellwinkel oder auch eine kontinuierliche Rotationsbewegung des Rotors 11 erreicht werden können.

Die dargestellte Antriebsvorrichtung 10 eignet sich somit sowohl zur Positionierung eines Gegenstands um sehr kleine Verstellwinkel als auch um große Verstellwinkel.

Das zweite Lagerelement 13 kann genauso ausgebildet sein wie das Lagerelement 12, es kann jedoch auch ein einfaches Widerlager für den Rotor bilden, wobei zweckmäßigerweise die Reibung zwischen dem Rotor 11 und dem Widerlager 13 geringer ist als zwischen dem Rotor 11 und dem Lagerring 16.

## Patentansprüche

1. Elektromechanische Antriebsvorrichtung (10), insbesondere zur exakten Positionierung eines Gegenstands im Nanometerbis Zentimeterbereich, mit einem in einer Lagervorrichtung (12, 13, 14) gelagerten Rotor (11) und mindestens einem, mit einer elektrischen Spannung beaufschlagbaren Piezoelement (18), wobei die Lagervorrichtung (12, 13, 14) mindestens eine Rotoraufnahme (16) aufweist, in der der Rotor (11) gelagert ist und die durch das mindestens eine Piezoelement (18) verdrehbar ist, wobei, die Rotoraufnahme an einem Lagerblock (15) begrenzt verdrehbar gelagert ist und die Reibung zwischen dem Rotor (11) und der mindestens einen Rotoraufnahme (16) derart ist, dass der Rotor (11) verhältnismäßig schnellen Drehbewegungen der mindestens einen Rotoraufnahme (16) nicht folgt, aber verhältnismäßig langsamen Drehbewegungen der mindestens einen Rotoraufnahme (16) folgt,
**dadurch gekennzeichnet, dass** die mindestens eine Rotoraufnahme über mehrere Stege (17) an dem Lagerblock begrenzt verdrehbar (15) gelagert ist.

2. Antriebsvorrichtung nach Anspruch 1, d.g.d. die Rotoraufnahme als Lagerring (16) ausgebildet ist.

3. Antriebsvorrichtung nach Anspruch 1 oder 2, **dadurch gekennzeichnet, dass** die Lagervorrichtung (12, 13, 14) zwei über mehrere Stege (17) an Lagerblöcken (15) gelagerte Lagerringe (16) als Rotoraufnahmen aufweist, in denen die Enden (11.1, 11.2) des Rotors (11) gelagert sind, wobei mindestens einer der Lagerringe (16) mittels mindestens eines Piezoelements (18) verdrehbar ist.

4. Antriebsvorrichtung nach Anspruch 1 oder 2, **dadurch gekennzeichnet, dass** die Lagervorrichtung (12, 13, 14) einen piezoelektrisch angetriebenen Lagerring (16) zur Aufnahme eines Endes (11.1) des Rotors (11) und ein Widerlager geringerer Reibung für das andere Ende (11.2) des Rotors (11) aufweist.

5. Antriebsvorrichtung nach einem der vorhergehenden Ansprüche, **dadurch gekennzeichnet, dass** die Elektroden des mindestens einen Piezoelements (18) an einen Sägezahngenerator angeschlossen sind, der im Wechsel langsame und schnelle Ausdehnungen und Kontraktionen des mindestens einen Piezoelements (18) und damit Drehbewegungen der mindestens einen Rotoraufnahme (16) erzeugt, wobei der Rotor (11) den langsamen Drehbewegungen folgt und den schnellen Drehbewegungen nicht folgt.

6. Antriebsvorrichtung nach einem der Ansprüche 1 bis 5, **dadurch gekennzeichnet, dass** der Rotor (11) sich verjüngende Enden aufweist.

7. Antriebsvorrichtung nach Anspruch 6, **dadurch gekennzeichnet, dass** der Rotor (11) kugelkalottenförmige Enden aufweist.

## Claims

1. Electromechanical drive apparatus (10), in particular for exact positioning of an object in the nanometre to centimetre range, with a rotor (11) mounted in a bearing apparatus (12, 13, 14) and at least one piezoelectric element (18) to which an electrical voltage can be applied, wherein the bearing apparatus (12, 13, 14) has at least one rotor seat (16) in which the rotor (11) is mounted and which is rotatable by the at least one piezoelectric element (18), [and] wherein the rotor seat is mounted with limited rotatability on a bearing block (15) and the friction between the rotor (11) and the at least one rotor seat (16) is such that the rotor (11) does not follow relatively rapid rotary motions of the at least one rotor seat (16) but does follow relatively slow rotary motions of the at least one rotor seat (16), **characterized in that** the at least one rotor seat is mounted with limited rotatability on the bearing block (15) by a number of bridging webs (17).

2. Drive apparatus according to Claim 1, **characterized in that** the rotor seat is configured as a bearing ring (16).

3. Drive apparatus according to Claim 1 or Claim 2, **characterized in that** the bearing apparatus (12, 13, 14) has two bearing rings (16) mounted on bearing blocks (15) by a number of bridging webs (17) as rotor seats in which the ends (11.1, 11.2) of the rotor (11) are mounted, at least one of the bearing rings (16) being rotatable by means of at least one piezoelectric element (18).

4. Drive apparatus according to Claim 1 or Claim 2, **characterized in that** the bearing apparatus (12, 13, 14) has a piezoelectrically driven bearing ring (16) for seating one end (11.1) of the rotor (11) and a counterbearing of lower friction for the other end (11.2) of the rotor (11).

5. Drive apparatus according to any one of the preceding claims, **characterized in that** the electrodes of the at least one piezoelectric element (18) are connected to a sawtooth generator which alternately produces slow and rapid expansions and contractions of the at least one piezoelectric element (18) and hence rotary motions of the at least one rotor seat (16), the rotor (11) following the slow rotary motions but not following the rapid rotary motions.

6. Drive apparatus according to any one of Claims 1 to 5, **characterized in that** the rotor (11) has ends of reduced diameter.

7. Drive apparatus according to Claim 6, **characterized in that** the rotor (11) has hemispherical ends.

## Revendications

1. Dispositif d'entraînement électromécanique (10), en particulier pour le positionnement précis d'un objet de l'ordre de quelques nanomètres à quelques centimètres, comportant un rotor (11) monté dans un dispositif de support 12, 13, 14 et au moins un piézo-élément (18) pouvant être soumis à une tension électrique, le dispositif de support (12, 13, 14) présentant au moins un logement pour rotor (16) dans lequel le rotor (11) est monté et qui peut être mis en rotation par ledit au moins un piézo-élement (18), le logement pour rotor étant monté sur un bloc de support (15), de façon à pouvoir tourner dans une mesure limitée, et la friction entre le rotor (11) et ledit au moins un logement pour rotor (16) étant telle que le rotor (11) ne suit pas des mouvements de rotation relativement rapides dudit au moins un logement de rotor (16), mais suit des mouvements de rotation relativement lents dudit au moins un logement de rotor (16), **caractérisé en ce que** ledit au moins un logement de rotor est monté sur le bloc de support (15) par plusieurs entretoises (17) par plusieurs entretoises (17) de manière à pouvoir tourner dans une mesure limitée.

2. Dispositif d'entraînement selon la revendication 1, **caractérisé en ce que** le logement pour rotor est réalisé comme une bague de palier (16).

3. Dispositif d'entraînement selon la revendication 1 ou 2, **caractérisé en ce que** le dispositif de support (12, 13, 14) comporte deux bagues de palier (16), en tant que logement pour rotor, montées sur des blocs de support (15) par plusieurs entretoises (17), bagues de support dans lesquelles sont montées les extrémités (11.1, 11.2) du rotor (11), l'une au moins des bagues de palier (16) pouvant tourner au moyen d'au moins un piézo-élément (18).

4. Dispositif d'entraînement selon la revendication 1 ou 2, **caractérisé en ce que** le dispositif de support (12, 13, 14) comporte une bague de palier (16), entraîné de façon piézo-électrique, destinée à recevoir une extrémité (11.1) du rotor (11), et une butée de moindre friction pour l'autre extrémité (11.2) du rotor (11).

5. Dispositif d'entraînement selon l'une des revendications précédentes, **caractérisé en ce que** les électrodes dudit au moins un piézo-élément (18) sont connectées à un générateur en dents de scie qui produit alternativement des dilatations et contractions lentes et rapides dudit au moins un piézo-élément (18) et donc des mouvements de rotation dudit au moins un logement pour rotor (16), le rotor (11) suivant les mouvements de rotation lents et ne suivant pas les mouvements de rotation rapides.

6. Dispositif d'entraînement selon l'une des revendications 1 à 5, **caractérisé en ce que** le rotor (11) présente des extrémités se rétrécissant.

7. Dispositif d'entraînement selon la revendication 6, **caractérisé en ce que** le rotor (11) présente des extrémités en forme de calotte sphérique.
